# EUROPÄISCHE PATENTSCHRIFT

(11) **EP 4 154 508 B1**
(45) Veröffentlichungstag und Bekanntmachung des Hinweises auf die Patenterteilung: **27.11.2024**
(21) Anmeldenummer: 21746376.9
(22) Anmeldetag: 09.07.2021
(51) Int. Cl.: H04L 65/40, G06Q 50/02, G05B 19/05, G06Q 50/06

(54) **DYNAMISCHES VORHALTEN VON KONTEXTABHÄNGIGEN RECHNERGESTÜTZTEN FUNKTIONALITÄTEN IN MOBILEN, VERTEILTEN EDGE CLOUDS**
DYNAMIC PROVISION OF CONTEXT-DEPENDENT COMPUTER-AIDED FUNCTIONS IN MOBILE DISTRIBUTED EDGE CLOUDS
FOURNITURE DYNAMIQUE DE FONCTIONNALITÉS ASSISTÉES PAR ORDINATEUR DÉPENDANT DU CONTEXTE DANS DES NUAGE MOBILES DISTRIBUÉS

(30) Priorität: 29.07.2020 EP 20188412
(43) Veröffentlichungstag der Anmeldung: 29.03.2023
(73) Patentinhaber: Siemens Aktiengesellschaft, 80333 München (DE)
(72) Erfinder: HUTH, Hans-Peter, 80638 München (DE); SAUER, Markus, 81739 München (DE); ZEIGER, Florian, 85635 Höhenkirchen-Siegertsbrunn (DE)
(74) Vertreter: Siemens Patent Attorneys
(86) Internationale Anmeldenummer: PCT/EP2021/069193
(87) Internationale Veröffentlichungsnummer: WO 2022/022991

(56) Entgegenhaltungen:
- US-A1- 2016 371 154
- US-A1- 2018 054 346
- US-A1- 2019 065 264
- US-A1- 2019 318 271
- MANCA MARCO ET AL: "A model-based framework for mobile apps customization through context-dependent rules", UNIVERSAL ACCESS IN THE INFORMATION SOCIETY: INTERNATIONALJOURNAL, SPRINGER VERLAG, BERLIN, DE, vol. 18, no. 4, 6 June 2018 (2018-06-06), pages 909 - 925, XP036922336, ISSN: 1615-5289, [retrieved on 20180606], DOI: 10.1007/S10209-018-0620-X

## Beschreibung

### GEBIET DER ERFINDUNG

Die Erfindung betrifft ein automatisiertes Verfahren, insbesondere ein computerimplementiertes Verfahren, sowie ein System zur Bereitstellung von Funktionalitäten einer mobilen Einheit für mindestens einer davon abgesetzt benötigten Funktion einer Nachfrageeinheit. Die mobile Einheit ist ein mobiler Edge Knoten einer Edge Cloud und die Nachfrageeinheit ist ein Teil der Edge Cloud.

### HINTERGRUND DER ERFINDUNG

Neue Geschäftsmodelle und neue Entwicklungen im technischen Bereich führen dazu, dass der Bedarf an Rechenkapazität und Rechenfunktionalität in der räumlichen Nähe von anfallender Sensordaten oder von Aktuatoren im Feld steigt. Ursachen dafür sind neben den neuen technischen Möglichkeiten vor allem auch technische Limitierungen, wie beispielsweise die fehlende Möglichkeit zur Übertragung großer Datenmengen.

Heute typische Architekturen laden beispielsweise alle von Sensoren erfassten Daten in eine Cloud-Applikation hoch, dort werden die Daten verarbeitet und die abgeleiteten Aktionen werden an die Systeme im Feld weitergegeben. Dies ist aber teilweise aufgrund der riesigen Datenmengen und herrschender Bandbreitenbeschränkungen oder anderer Applikationsanforderungen (z.B. geringe Latenz) faktisch nicht möglich oder einfach nicht sinnvoll bzw. mit den bekannten technischen Möglichkeiten nicht durchführbar.

Typische Anwendungsbeispiele sind im Smart City / Mobility Umfeld autonome Fahrzeuge, bei denen eine Kommunikationsinfrastruktur eventuell noch möglich wäre, aber wenig sinnvoll ist. Die Fahrzeuge erzeugen in etwa 4.000 GB / Tag an Daten, die primär für lokal relevante Entscheidungen genutzt werden.

Ein Transfer dieser Datenmengen in Cloud-Applikationen ist dabei wenig sinnvoll, kostenintensiv und kann ggf. auch andere Anforderungen, wie beispielsweise die Latenz, verletzen.

Ein weiteres Beispiel sind Anwendungen in einem landwirtschaftlichen oder Off-shore maritimen Umfeld. Hierbei können neue datenintensive Anwendungen mit Data-Analytics, künstlicher Intelligenz oder Autonomie Funktionen aufgrund mangelnder Kommunikationsinfrastruktur nicht mehr mit hierarchischen statischen Cloud-Architekturen gelöst werden.

Die Arbeitsgebiete, die sich mit diesen Themen der Bereitstellung von Rechenressourcen im Feld auseinandersetzten, sind Edge und Fog Computing. Typischerweise werden heutzutage Lösungen vorgeschlagen, bei denen während der Systemauslegung die auszuführenden Applikationen und die Ausführung der Umgebungen geplant werden und ggf. Rechenressourcen in Form von zusätzlichen Edge Knoten je nach Bedarf mit vorgehalten werden. "Edge Knoten" sind Geräte mit Rechenleistung, Speicher und Kommunikationsfähigkeiten, die typischerweise zwischen den Endgeräten und einer Cloud platziert sind und - ähnlich einem Rechenzentrum - beliebige Anwendung ausführen können.

US2019318271 A1 zeigt ein System, das mit einer Live-Umgebung verbunden ist, die einen aktuellen Algorithmus ausführt, umfassend:einen Algorithmus-Datenspeicher, der Informationen über einen Pool von verfügbaren Algorithmen enthält und eine Einsatzplattform, die in einem Randbereich an einem Industriestandort implementiert ist, der mit der realen Umgebung verbunden ist, und die mit dem Algorithmus-Datenspeicher gekoppelt ist.

US 2019/065264 A1 zeigt ein System zum dynamischen Konfigurieren eines mit einer Anwendung verbundenen Prozesses auf der Grundlage einer oder mehrerer Umgebungseigenschaften, wobei das System Folgendes umfasst:ein Datenbanksystem, das unter Verwendung eines Serversystems mit einem oder mehreren Prozessoren implementiert ist, wobei das Datenbanksystem konfigurierbar ist, um Folgendes zu bewirkenverarbeiten von Kontextdaten, die von einem mobilen Gerät bereitgestellt werden, auf dem die Anwendung nutzbar ist, wobei die Kontextdaten ein oder mehrere Umgebungsmerkmale anzeigen, die unter Verwendung des mobilen Geräts erfasst werden, wobei das eine oder die mehreren Umgebungsmerkmale mit einer physischen Umgebung, in der sich das mobile Gerät befindet oder befunden hat.

Dies berücksichtigt aber weder die mögliche Mobilität von Edge Ressourcen, beispielsweise Fahrzeuge mit Rechenleistung, wie Autos, Traktoren, Schiffe, Flugzeuge, etc., noch die potenzielle Dynamik von Aufgaben, die von der sich bildenden dynamische Edge Cloud, z.B. neue Datenerhebungen an ausgewählten Orten, Kommunikationsaufgaben, Analyse Aufgaben, etc., ausgeführt werden sollen.

### ZUSAMMENFASSUNG DER ERFINDUNG

Es ist Aufgabe der Erfindung, eine Lösung anzugeben, um mobile, ungenutzte Rechenressourcen einem System einfach und kostengünstig zugänglich zu machen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, die potenzielle Mobilität von Einheiten, wie Edge Knoten, zu Nutze zu machen, um durch (technisch) kostengünstiges, redundantes Vorhalten von Regeln und von entsprechenden Funktionstemplates anderen Komponenten des Systems aufgrund von Vorhersagemechanismen diese Funktionalität zur Verfügung stellen zu können. Dadurch wird es möglich, mobile ungenutzte Rechenressourcen einem System dynamisch und kontextabhängig zugänglich zu machen und beispielsweise sinnvoll für datenintensive Funktionen in beispielsweise mobilen Edge-Cloud Use Cases zu nutzen. Hierdurch werden insbesondere auch Applikationen möglich, die gemäß dem Stand der Technik aufgrund von Kommunikations- und Kosteneinschränkungen nicht oder nur eingeschränkt möglich sind.

Eine ähnliche dynamische, kontextabhängige Lösung ist nicht bekannt. Aktuelle Ansätze lösen das Problem durch Vorhalten ausreichender lokaler Rechenressourcen oder der Bereitstellung von Kommunikationsverbindungen, die aber einen Großteil der Betriebszeit nicht genutzt werden. Viele wünschenswerte neue mobile Edge Cloud Anwendung sind mit aktuellen Konzepten nicht umsetzbar.

Eine Cloud-basierte oder Edge Cloud-basierte IoT-Anwendung besteht aus mehreren virtuellen und physikalischen Recheneinheiten, Datenquellen, Aktuatoren, Funktionen, Diensten, etc., die durch Kommunikation eine oder mehrere systemübergreifende Gesamtapplikationen realisieren. In heutigen IoT-Systemen wird typischerweise jede Teilfunktion (z.B. Service-Applikation oder Analyse-Funktion) einer Komponente zum Designzeitpunkt dediziert im System zugewiesen. Im erfindungsgemäßen System werden derartige Funktionen oder Teilfunktionen dynamisch von Systemkomponenten, beispielsweise einem landwirtschaftlichen Betrieb mit seinem Farmmanagement System auf einem Smartphone eines Landwirts, zur Laufzeit angefordert, und dann kontextspezifisch ausgeführt. Die ausführenden Edge Knoten sind potenziell mobil und der Kontext (insbesondere räumlich) ist damit nicht fix und in der Regel auch nicht deterministisch.

Funktionsanforderungen bestehen im erfindungsgemäßen System aus einer oder mehrerer Regeln eines Kontextregelwerks (z.B. "Mobiler Edge-Knoten im Bereich x,y" und "Es regnet gleichzeitig im Bereich x,y"), einer Beschreibung der Edge Knoten Eigenschaften und der entsprechenden Aufgabe bzw. Funktion in Form z.B. eines auszuführenden Skripts, eines Funktions-Containers, einer Applikation oder einer Netzwerkkonfiguration. Dieses Tupel aus Funktion und Regeln wird in das System eingebracht und auf mobile Einheiten, wie Edge Knoten, die für diese Aufgabe in Frage kommen, übertragen. Mobile Einheiten sind beschrieben durch die Funktionalität, die sie bereitstellen, die HW und Betriebssystemeigenschaften sowie nicht-funktionale Eigenschaften, wie z.B. Sicherheitsmerkmale (IT Security), Kosten, Eigentümer, aktueller Ort, etc.

Die Zuweisung der Funktionen kann nach fest programmierten Abläufen geschehen oder durch eine zentrale bzw. dezentrale Vorhersage-Komponente, die die zukünftigen Kontexte für das System vorhersagt und daher mit einer ausreichenden Zuverlässigkeit ein Set an potenziellen mobilen Einheiten bestimmt, auf denen die Funktionen bzw. Aufgaben zukünftig potenziell ausgeführt werden könnten.

Wird eine Funktion bzw. Aufgabe auf eine mobile Einheit übertragen, wird diese dort zunächst nicht sofort ausgeführt. Stattdessen werden die Regeln auf dieser mobilen Einheit in einer Regel-Engine über ein Regel-Management installiert und die Funktion auf der mobilen Einheit in einem Funktions-Repository oder ähnlichem hinterlegt.

Bewegt sich die mobile Einheit, also zum Beispiel der Edge Knoten, in den entsprechenden Kontext, oder befindet sich die mobile Einheit schon in dem entsprechenden Kontext, so dass das Regelwerk für eine vorgegeben Aufgabe triggert, wird die entsprechende Funktion auf der mobilen Einheit instanziiert und ausgeführt. Sobald die Funktion/Aufgabe abgeschlossen ist, wird das Ergebnis an den entsprechenden Auftraggeber (= Nachfrageeinheit) nach vorgegebenen Regeln übermittelt.

Ein weiterer Aspekt der Erfindung besteht darin, aufgrund der entsprechenden Vorhersagen die Regeln und Funktionen auf mehreren mobilen Einheiten gleichzeitig vorzuhalten, um über eine derartige Redundanz eine ausreichende Wahrscheinlichkeit zu erreichen, dass die Aufgabe bzw. Funktion ausgeführt wird. In einem extremen Fall wird die Aufgabe bzw. Funktion allen mobilen Einheiten des Systems zugewiesen.

Vorteile eines derartigen Systems mit mobilen Einheiten sind:
- Eine Bereitstellung von Funktionen, die sonst lokale nicht zur Verfügung stehen.
- Eine dynamische Nutzbarmachung von ungenutzten Ressourcen auf beispielsweise mobilen Edge und IoT Geräten.
- Das Vorhalten von Funktionalitäten wird reduziert auf einen Speicherplatz für das Vorhalten der Funktionalität und den Regeln, die zur Ausführung der Funktionen führen. Dafür entstehen an dem System keine Aufwände (z.B. Energieverbrauch durch Funktionsausführung) und andere ausgeführte Funktionen auf dem System werden nicht beeinflusst.
- Ein kontextbezogener Deployment Mechanismus für Funktionen und Software Komponenten, die ggf. nur Kommunikationsverbindungen mit einer niederen Bandbreite haben.
- Die Autarkie eines Gerätes, z.B. bei Ausfall der Kommunikation, wird erhöht.

Die Erfindung beansprucht ein automatisiertes, insbesondere computerimplementiertes Verfahren zur Bereitstellung von Funktionalitäten mindestens einer mobilen Einheit zum Ausführen mindestens einer davon abgesetzt benötigten Funktion einer Nachfrageeinheit,
- wobei in der mobilen Einheit die benötigte Funktion vorgehalten wird,
- wobei die Ausführung der Funktion kontextabhängig ist,
- wobei für die Ausführung der Funktion ein Kontextregelwerk in der mobilen Einheit vorgehalten wird und
- wobei bei einer Erfüllung einer oder mehrerer Regeln des Kontextregelwerks die Funktion in der mobilen Einheit ausgeführt wird.

Kontext im IT-Umfeld meint jede Art von Information, die dazu verwendet werden kann, die Situation einer Entität in Interaktion mit anderen Entitäten zu charakterisieren. Da Kontext von der jeweiligen Interaktion abhängt, kann man für eine Information nicht pauschal beantworten, ob sie Kontext ist oder nicht. Kontext kann dabei eine einzelne Information sein oder eine Kombination aus vielen Informationen unterschiedlicher Quellen oder verschiedener Zeitpunkte. Kontext bildet die Grundlage für kontextsensitive Anwendungen. Kontextsensitivität bzw. Kontext-bezogen bezeichnet das Verhalten von Anwendungsprogrammen, die Informationen über ihren "Kontext", also ihre Umgebung, benutzen, um ihr Verhalten darauf abzustimmen.

Funktionalitäten sind beispielsweise Rechenkapazität oder Kommunikationskapazität. "Funktion" schließt auch die Abarbeitung einer Aufgabe bzw. einer Aufgabenstellung mit ein. "Funktion" kann auch als "Anwendungsprogramm" bezeichnet werden.

In einer Weiterbildung kann die mobile Einheit ein Edge Knoten einer Edge Cloud und die Nachfrageeinheit ein Teil der Edge Cloud sein.

In einer weiteren Ausgestaltung kann nach dem Ausführen der Funktion das Ergebnis an die Nachfrageeinheit gemäß dem Kontextregelwerk übermittelt werden. Das heißt, auch die Rückübermittlung an die Nachfrageeinheit erfolgt Regel-basiert.

In einer weiteren Ausführungsform kann aufgrund eines Vorhersagemodells das Kontextregelwerk und die mindestens eine Funktion auf mindestens zwei mobilen Einheiten redundant vorgehalten werden, wobei das Vorhersagemodell ausgebildet ist, über die geschaffene Redundanz eine vorgegebene Wahrscheinlichkeit, die Funktion auszuführen, zu erreichen.

In einer weiteren Ausgestaltung kann die mobile Einheit eingerichtet sein, weiteren mobilen Einheiten zu übermitteln, welche Regeln bei der mobilen Einheit getriggert haben und welche Funktion ausgeführt wird.

In einer weiteren Ausprägung kann die Nachfrageeinheit eingerichtet sein, die Wichtigkeit und/oder Dringlichkeit der Ausführung der Funktion an die mobile Einheit zu übertragen.

Die Erfindung beansprucht auch ein System, aufweisend:
- mindestens eine Nachfrageeinheit,
- mindestens eine mobile Einheit, die eingerichtet ist, Funktionalitäten für mindestens einer davon abgesetzt benötigten Funktion der Nachfrageeinheit bereitzustellen und bei Bedarf auszuführen, wobei die Ausführung der Funktion kontextabhängig ist,
- ein in der mobilen Einheit ausgebildetes Regel Engine Modul, das eingerichtet ist, die Funktion anhand eines in dem Regel Engine Modul gespeicherten Kontextregelwerks auszuführen, wobei bei einer Erfüllung einer oder mehrerer Regeln des Kontextregelwerks die Funktion in der mobilen Einheit ausgeführt wird oder die schon ausgeführte Funktion gestoppt wird.

In einer Weiterbildung weist das System auf:
- ein in der mobilen Einheit ausgebildetes Funktion Runtime Modul, das eingerichtet ist, die Funktion zu instanziieren und diese isoliert von weiteren Funktionen auszuführen.

In einer weiteren Ausgestaltung weist das System auf:
- ein in der mobilen Einheit ausgebildetes Kontext Management Modul, das eingerichtet ist, den aktuellen Kontext der mobilen Einheit zu ermitteln.

In einer weiteren Ausführungsform weist das System auf:
- ein in der mobilen Einheit ausgebildetes Regel Management Modul, das eingerichtet ist, das Kontextregelwerk vorzuhalten.

In einer weiteren Ausführungsform weist das System auf:
- ein in der mobilen Einheit ausgebildetes Funktions-Repository Modul, das eingerichtet ist, die Funktionen zu speichern, die potenziell ausgeführt werden sollen, und dem Funktion Runtime Modul zur Verfügung zu stellen.

In einer weiteren Ausgestaltung weist das System auf:
- ein in der mobilen Einheit ausgebildetes Kontext Predictor Modul, das eingerichtet ist, den Kontext der mobilen Einheit vorherzusagen.

In einer weiteren Ausprägung weist das System auf:
- ein in der mobilen Einheit ausgebildetes Kontext Sensor Modul, das eingerichtet ist, Informationen über den Kontext zu generieren, insbesondere Daten von Sensoren zu erfassen.

In einer weiteren Ausbildung weist das System auf:
- eine Movement, Path, Coverage und Kontext Predictor Komponente, die eingerichtet ist, den Komponenten des Systems Kontexte vorherzusagen, insbesondere Bewegungsprofile, und der mobilen Einheit zur Verfügung zu stellen.

In der Ausführungsform ist das System als Edge Cloud und die mobile Einheit als Edge Knoten ausgebildet.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: ein Blockschaltbild eines Ausführungsbeispiels und,
- FIG. 2: ein Ablaufdiagramm eines Verfahrens zur kontextbezogenen Bereitstellung von Rechenleistung.

### DETAILLIERTE BESCHREIBUNG DER ERFINDUNG

Zukünftige IoT Systeme und Edge Cloud Systeme werden aus einer Vielzahl unterschiedlicher Komponenten bestehen. Dabei werden diese Komponenten verschiedene Eigenschaften mit in das System einbringen. In zunehmendem Maße werden Komponenten mobil sein, bzw. es wird Rechenleistung auf mobilen Einheiten verfügbar sein. Des Weiteren können die zu erbringenden Aufgaben/Funktionen sowie die vorhandene Kommunikationsinfrastruktur ortsabhängig sein. Eine manuelle Konfiguration eines so komplexen Systems ist sehr aufwändig und auch fehleranfällig. Um einen zuverlässigen Betrieb einer derart komplexen und dynamischen Systemtopologie zu ermöglichen, schafft der erfindungsgemäße Mechanismus eine Umgebung zur automatisierten und nachvollziehbaren Planung, Verteilung und Ausführung von Funktionen/Aufgaben.

Kern der Erfindung ist die Schaffung der technischen Möglichkeit, beispielsweise auf Basis von lernenden Vorhersagemechanismen, Funktionen zur Ausführung ggf. mehrfach und redundant zusammen mit Kontextregeln mitzugeben. Diese werden dann erst beim Triggern der Kontextbedingungen in den Ausführungszustand überführt. Der Kontext (siehe Details dazu auch weiter oben) kann hier durch physikalische Größen, Objekteigenschaften (z.B. Geo-Position, Bewegungsprofile, Pfade und Coverage der mobilen Einheit beispielsweise (Edge) Cloud oder Kommunikationsinfrastruktur) und/oder Umgebungseigenschaften (z.B. Vorhandensein bestimmter Voraussetzungen wie einer externen Energiequelle oder auch örtliche Nähe von Systemteilnehmern/Nutzern) bestimmt werden.

Auch kann der Kontext durch Ergebnisse aus Berechnungen bestimmt werden (z.B. Vorhersagen basierend auf KI-Algorithmen oder Modellen, Simulationen, Emulationen, etc.) und auch aus mehreren abhängigen oder unabhängigen Parametern definiert sein. Des Weiteren können geschäftliche Regeln oder Nutzervorlieben berücksichtigt werden.

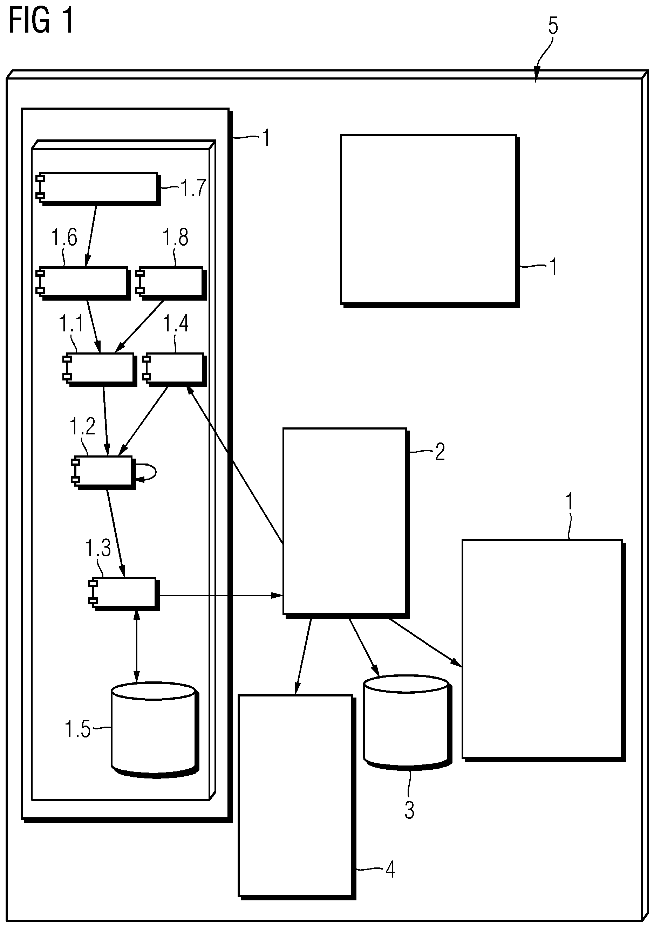

FIG. 1 zeigt als Ausführungsbeispiel ein Blockschaltbild eines Systems mit einer Edge Cloud 5. Das System weist folgende Komponenten auf:
- Mehrere mobile Edge Knoten 1, die potenziell Rechen-, Kommunikations- und/ oder Speicherfunktionen übernehmen können. Diese haben u.a. folgende Module:
   o Kontext Management Modul 1.1; ein Modul zur Bestimmung des aktuellen Kontextes des Edge Knotens (z.B. aktuelle Bewegungsplanung)
   o Regel Engine Modul 1.2; dieses Modul überprüft bei jedem Kontextwechsel ob ein Set von Regeln für eine Funktion erfüllt ist, oder bei ausgeführten Funktionen die Regeln nicht mehr triggern. Diese Informationen werden an das Funktion Runtime Modul 1.3 weitergegeben und entsprechende Funktionen werden entweder instanziiert oder gestoppt.
   ∘ Funktion Runtime Modul 1.3; dieses Modul instanziiert die entsprechenden Funktionen und führt diese isoliert von anderen Funktionen aus.
   ∘ Regel Management Modul 1.4; dieses Modul hält das entsprechende Kontextregelwerk (ein Set von Regeln) vor, das zur Ausführung von Funktionen auf dem mobilen Edge Knoten 1 führen soll.
   ∘ Funktions-Repository Modul 1.5; dieses Modul speichert alle Funktionen, die potenziell ausgeführt werden sollen, und stellt sie den anderen Modulen insbesondere dem Funktion Runtime Modul 1.3 zur Verfügung.
   ∘ Lokales Kontext Predictor Modul 1.6; es ist ein lokales Modul zur Vorhersage des Kontextes auf dem Edge Knoten 1.
   ∘ Kontext Historie Modul 1.7; ein Modul, das die Historie über alle relevanten Daten für eine Kontextvorhersage speichert.
   ∘ Kontext Sensor Modul 1.8; ein Modul, das die Kontextinformationen generiert, wie zum Beispiel Daten von Sensoren oder über Funktionen.
- Eine Aufgaben-/Funktionsersteller Komponente 2 als Nachfrageeinheit; diese Systemkomponente erstellt Aufgaben, die in der mobilen Edge Cloud 3 ausgeführt werden sollen. Dazu wird in der Komponente 2 beispielsweise aus Funktionstemplates, den entsprechenden Parametern und einem Set von Kontextregeln eine Aufgabe für das System generiert und die Ausführung der Aufgabe im System angefordert. Die Anforderung kann z.B. durch einen Menschen aber auch automatisiert durch eine andere Automatisierungskomponente auf Basis von Event Triggern erfolgen.
- Eine optionale Funktions-Repository Komponente 3; sie ist/sind eine oder mehrere zentral oder dezentral organisierte Ablage(n), die möglichen Funktionen in Form von z.B. Container, Skripten, Netzwerkfunktionen beispielsweise als Templates anderen Komponenten zur Verfügung stellt.
- Eine Movement, Path, Coverage und Kontext Predictor Komponente 4; eine Komponente, die zentral oder dezentral logisch realisiert den anderen Komponenten Kontextvorhersagen (z.B. Bewegungsprofile) der mobilen Edge Knoten 1 im System zur Verfügung stellt. Diese Komponente 4 kann für jeden einzelnen mobilen Edge Knoten 1, für jeden Kunden / Tenant (= Nachfrageeinheit) im System oder das ganze Eco-System realisiert sein.

In einer weiteren Ausprägung, macht ein mobiler Edge Knoten 1 den anderen potenziellen mobilen Edge Knoten 1 bekannt, welche Regeln bei ihm getriggert haben und welche Funktionen er daraufhin ausführt und ggf. auch wie der entsprechende Ausführungsstatus ist. Die anderen mobilen Edge Knoten 1, die dieselbe Funktion bzw. Aufgabe vorhalten, können dann beispielsweise diese Information so interpretieren, dass sie diese Funktion nicht ausführen müssen, wenn entsprechende Regeln bei ihnen triggern, da die Funktion bereits durch einen anderen mobilen Edge Knoten 1 ausgeführt wird. Alternativ kann die Funktion beispielsweise auch redundant ausgeführt werden.

Auch kann ein Edge Knoten 1 Stromsparfunktionen nutzen oder den Hauptspeicher entlasten, wenn gewisse Anwendungen aktuell nicht benötigt werden, indem er diese z.B. stoppt, auslagert oder mit verminderter Geschwindigkeit ausführt. Die Form der Reaktion auf diese Situation kann beispielsweise auch in den Regeln vorgegeben werden. Auch kann ein Edge Knoten 1 die Aufforderung nach Ausführung einer Funktion auch ablehnen, z.B. wenn der Batteriestand niedrig ist.

In einer weiteren Ausprägung werden die Wichtigkeit und Dringlichkeit der Funktionsausführung mit in die Aufgabenanfrage aufgenommen. Diese können dann beispielsweise durch Kostenfunktionen interpretiert werden und die mobilen Edge Knoten 1 können potenziell dazu gebracht werden, bestimmte Kontexte bewusst zu erzeugen oder ggf. länger zu erhalten (z.B. Umwege in Kauf nehmen, um die Ausführung einer Funktion zu garantieren). Dies kann auch weiterhin dahin ausgeprägt werden, dass diese direkt technisch auf eine geschäftliche Funktion projiziert und beispielsweise mit Smart Contracts verbindlich in einem offenen Eco System angeboten werden und die Ausführung fälschungssicher dokumentiert wird. Hierzu kann beispielsweise die Blockchain Technologie zum Einsatz kommen.

Funktionen für das System sind beispielsweise:
- Datensammel-Funktionen "Data Mule": Wenn die mobiles Einheit im Bereich a ist, dann stelle über Kommunikationsschnittstelle x zu Systemen vom Typ y eine Verbindung her, nimm Temperatur Sensordaten auf, Vorverarbeite sie nach Funktion b, und lade die Ergebnisdaten beim Vorbeikommen an Station c hoch, welche die Daten weiter leiten soll.
- Deployment Funktionen "Update/ Installation Mule": Wenn mobile Einheit an Komponenten mit folgenden Eigenschaften x,y vorbeikommt, lade per direkter Kommunikation folgendes Update hoch und authentisiere dich mit dem Zertifikat z.
- Kommunikations-Gateway "Comm Mule": Wenn mobiles Einheit sich voraussichtlich für x Stunden im Bereich a, b aufhält, stelle den Komponenten c,d für 60 Min einen Kommunikationslink e mit den Diensteigenschaften f zur Verfügung.
- Analytics Funktionen "Analytics Mule": Wenn mobile Einheit sich voraussichtlich für x Stunden im Bereich a,b aufhält, sammle von den lokalen Sensortypen c, d für 60 Min die Daten ein, analysiere lokal die Daten mit Model e, und sende die Daten via Kommunikationslink f, an g.

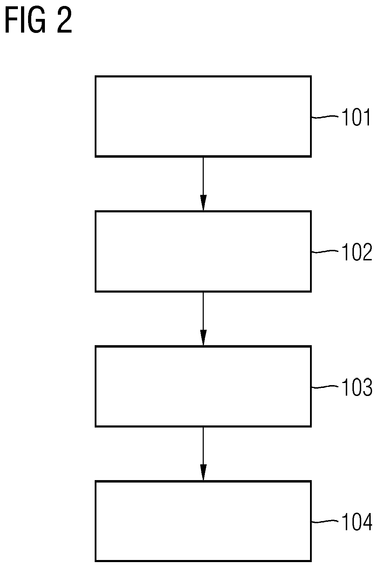

FIG. 2 zeigt ein Ablaufdiagramm eines erfindungsgemäßen Verfahrens zur Bereitstellung von Funktionalitäten einer mobilen Einheit, beispielsweise eines mobilen Edge Knoten einer Edge Cloud, für eine davon abgesetzt benötigte Funktion einer Nachfrageeinheit. Die Nachfrageeinheit kann auch als Aufgaben-/Funktionsersteller Komponente bezeichnet werden.

In einem ersten Schritt 101 wird in der mobilen Einheit die von einer Nachfrageeinheit benötigte Funktion geladen und somit vorgehalten, um bei Bedarf ausgeführt zu werden. In einem zweiten Schritt 102 wird ein für eine kontextabhängige Ausführung der Funktion zu verwendendes Kontextregelwerk in die mobile Einheit geladen und ist damit in der mobilen Einheit verfügbar. In einem dritten Schritt 103 wird bei einer Erfüllung einer oder mehrerer Regeln des Kontextregelwerks die Funktion in der mobilen Einheit ausgeführt. In einem abschließenden vierten Schritt 104 wird das Ergebnis der Ausführung der Funktion an die Nachfrageeinheit übermittelt.

### Bezugszeichenliste

- 1: Edge Knoten
- 1.1: Kontext Management Modul
- 1.2: Regel Engine Modul
- 1.3: Funktion Runtime Modul
- 1.4: Regel Management Modul
- 1.5: Funktions-Repository Modul
- 1.6: Kontext Predictor Modul
- 1.7: Kontext Historie Modul
- 1.8: Kontext Sensor Modul
- 2: Aufgaben-/Funktionsersteller Komponente
- 3: Funktions-Repository Komponente
- 4: Movement, Path, Coverage und Context Predictor Komponente
- 5: Edge Cloud

- 101: Laden einer Funktion
- 102: Laden eines Regelwerks
- 103: Ausführen der Funktion
- 104: Übertragung der Ergebnisse

## Patentansprüche

1. Automatisiertes Verfahren zur Bereitstellung von Funktionalitäten mindestens einer mobilen Einheit (1) zum Ausführen mindestens einer benötigten Funktion einer von der mobilen Einheit (1) abgesetzten Nachfrageeinheit (2),
- wobei in der mobilen Einheit (1) die benötigte Funktion vorgehalten wird (101),
- wobei die Ausführung der Funktion kontextabhängig ist,
- wobei für die Ausführung der Funktion ein Kontextregelwerk in der mobilen Einheit (1) vorgehalten wird (102),
- wobei bei einer Erfüllung einer oder mehrerer Regeln des Kontextregelwerks die Funktion in der mobilen Einheit (1) ausgeführt wird (103), und
- wobei die mobile Einheit (1) ein Edge Knoten einer Edge Cloud (5) ist und die Nachfrageeinheit (2) ein Teil der Edge Cloud (5) ist.

2. Verfahren nach Anspruch 1, wobei nach dem Ausführen der Funktion das Ergebnis an die Nachfrageeinheit (2) gemäß dem Kontextregelwerk übermittelt (104).

3. Verfahren nach einem der vorhergehenden Ansprüche, wobei aufgrund eines Vorhersagemodells das Regelwerk und die mindestens eine Funktion auf mindestens zwei mobilen Einheiten (1) redundant vorgehalten wird, wobei das Vorhersagemodell ausgebildet ist, über die geschaffene Redundanz eine vorgegebene Wahrscheinlichkeit, die Funktion auszuführen, zu erreichen.

4. Verfahren nach einem der vorhergehenden Ansprüche, wobei die mobile Einheit (1) eingerichtet ist, weiteren mobilen Einheiten (1) zu übermitteln, welche Regeln bei der mobilen Einheit (1) getriggert haben und welche Funktion ausgeführt wird.

5. Verfahren nach einem der vorhergehenden Ansprüche, wobei die Nachfrageeinheit (2) eingerichtet ist, die Wichtigkeit und/oder Dringlichkeit der Ausführung der Funktion an die mobile Einheit (1) zu übertragen.

6. System (5), aufweisend:
- mindestens eine Nachfrageeinheit (2),
- mindestens eine mobile Einheit (1), die eingerichtet ist, Funktionalitäten für mindestens einer benötigten Funktion der von der mobilen Einheit abgesetzten Nachfrageeinheit (2) bereitzustellen und bei Bedarf auszuführen, wobei die Ausführung der Funktion kontextabhängig ist,
- ein in der mobilen Einheit (1) ausgebildetes Regel Engine Modul (1.2), das eingerichtet ist, die Funktion anhand eines in dem Regel Engine Modul (1.2) gespeicherten Kontextregelwerks auszuführen, wobei bei einer Erfüllung einer oder mehrerer Regeln des Kontextregelwerks die Funktion in der mobilen Einheit (1) ausgeführt wird oder die schon ausgeführte Funktion gestoppt wird,
**dadurch gekennzeichnet,**
**dass** das System als Edge Cloud (5) und die mobile Einheit als Edge Knoten (1) ausgebildet sind.

7. System nach Anspruch 6, **gekennzeichnet durch**:
- ein in der mobilen Einheit (1) ausgebildetes Funktion Runtime Modul (1.3), das eingerichtet ist, die Funktion zu instanziieren und diese isoliert von weiteren Funktionen auszuführen.

8. System nach Anspruch 6 oder 7, **gekennzeichnet durch**:
- ein in der mobilen Einheit (1) ausgebildetes Kontext Management Modul (1.1), das eingerichtet ist, den aktuellen Kontext der mobilen Einheit (1) zu ermitteln.

9. System nach einem der Ansprüche 6 bis 8, **gekennzeichnet durch**:
- ein in der mobilen Einheit (1) ausgebildetes Regel Management Modul (1.4), das eingerichtet ist, das Kontextregelwerk vorzuhalten.

10. System nach einem der Ansprüche 7 bis 9, **gekennzeichnet durch**:
- ein in der mobilen Einheit (1) ausgebildetes Funktions-Repository Modul (1.5), das eingerichtet ist, die Funktionen zu speichern, die potenziell ausgeführt werden sollen, und dem Funktion Runtime Modul (1.3) zur Verfügung zu stellen.

11. System nach einem der Ansprüche 6 bis 10, **gekennzeichnet durch**:
- ein in der mobilen Einheit ausgebildetes Kontext Predictor Modul (1.6), das eingerichtet ist, den Kontext der mobilen Einheit (1) vorherzusagen.

12. System nach einem der Ansprüche 6 bis 11, **gekennzeichnet durch**:
- ein in der mobilen Einheit (1) ausgebildetes Kontext Sensor Modul (1.8), das eingerichtet ist, Informationen über den Kontext zu generieren, insbesondere Daten von Sensoren.

13. System nach einem der Ansprüche 6 bis 12, **gekennzeichnet durch**:
- eine Movement, Path, Coverage und Kontext Predictor Komponente (4), die eingerichtet ist, den Komponenten des Systems (5) Kontexte vorherzusagen, insbesondere Bewegungsprofile, und der mobilen Einheit (1) zur Verfügung zu stellen.

## Claims

1. Automated method for providing functionalities of at least one mobile unit (1) for carrying out at least one required function of a request unit (2) separate from the mobile unit (1),
- wherein the required function is provided (101) in the mobile unit (1),
- wherein the function is carried out based on the context,
- wherein a context rule system is provided (102) in the mobile unit (1) for carrying out the function,
- wherein the function is carried out (103) in the mobile unit (1) if one or more rules of the context rule system are satisfied, and
- wherein the mobile unit (1) is an edge node of an edge cloud (5) and the request unit (2) is a part of the edge cloud (5).

2. Method according to Claim 1, wherein, once the function has been carried out, the result is transmitted (104) to the request unit (2) according to the context rule system.

3. Method according to one of the preceding claims, wherein the rule system and the at least one function are provided redundantly on at least two mobile units (1) on the basis of a prediction model, wherein the prediction model is designed to achieve a predefined probability of performing the function by means of the provided redundancy.

4. Method according to one of the preceding claims, wherein the mobile unit (1) is configured to inform further mobile units (1) which rules have triggered in the mobile unit (1) and which function is carried out.

5. Method according to one of the preceding claims, wherein the request unit (2) is configured to convey the importance and/or urgency of carrying out the function to the mobile unit (1) .

6. System (5), comprising:
- at least one request unit (2),
- at least one mobile unit (1) which is configured to provide functionalities for at least one required function of the request unit (2) separate from the mobile unit, and to carry out same as required, wherein the function is carried out based on the context,
- a rule engine module (1.2) formed in the mobile unit (1) and configured to carry out the function on the basis of a context rule system stored in the rule engine module (1.2), wherein the function is carried out in the mobile unit (1) or the function already being carried out is stopped if one or more rules of the context rule system are satisfied,
**characterized**
**in that** the system is formed as an edge cloud (5) and the mobile unit is formed as an edge node (1).

7. System according to Claim 6, **characterized by**:
- a function runtime module (1.3) formed in the mobile unit (1) and configured to instantiate the function and carry it out in isolation from further functions.

8. System according to Claim 6 or 7, **characterized by**:
- a context management module (1.1) formed in the mobile unit (1) and configured to determine the current context of the mobile unit (1).

9. System according to one of Claims 6 to 8, **characterized by**:
- a rule management module (1.4) formed in the mobile unit (1) and configured to provide the context rule system.

10. System according to one of Claims 7 to 9, **characterized by**:
- a function repository module (1.5) formed in the mobile unit (1) and configured to store the functions which are potentially intended to be carried out and to make them available to the function runtime module (1.3).

11. System according to one of Claims 6 to 10, **characterized by**:
- a context predictor module (1.6) formed in the mobile unit and configured to predict the context of the mobile unit (1).

12. System according to one of Claims 6 to 11, **characterized by**:
- a context sensor module (1.8) formed in the mobile unit (1) and configured to generate information relating to the context, in particular data from sensors.

13. System according to one of Claims 6 to 12, **characterized by**:
- a movement, path, coverage and context predictor component (4) configured to predict contexts for the components of the system (5), in particular movement profiles, and make them available to the mobile unit (1).

## Revendications

1. Procédé automatisé de mise à disposition de fonctionnalités d'au moins une unité mobile (1) pour l'exécution d'au moins une fonction requise d'une unité de requête (2) déportée de l'unité mobile (1),
- dans lequel la fonction requise est conservée (101) dans l'unité mobile (1),
- dans lequel l'exécution de la fonction dépend du contexte,
- dans lequel un ensemble de règles de contexte est maintenu (102) dans l'unité mobile (1) pour l'exécution de la fonction,
- dans lequel, lorsqu'une ou plusieurs règles de l'ensemble de règles contextuelles sont satisfaites, la fonction est exécutée (103) dans l'unité mobile (1), et
- dans lequel l'unité mobile (1) est un nœud de périphérie d'un nuage de périphérie (5) et l'unité de requête (2) est une partie du nuage de périphérie (5).

2. Procédé selon la revendication 1, dans lequel, après l'exécution de la fonction, le résultat est transmis (104) à l'unité de requête (2) conformément à l'ensemble de règles contextuelles.

3. Procédé selon l'une des revendications précédentes, dans lequel, sur la base d'un modèle de prévision, l'ensemble de règles et la au moins une fonction sont conservés de manière redondante sur au moins deux unités mobiles (1), le modèle de prévision étant conçu pour atteindre, par l'intermédiaire de la redondance créée, une probabilité prédéterminée d'exécution de la fonction.

4. Procédé selon l'une des revendications précédentes, dans lequel l'unité mobile (1) est agencée pour transmettre à d'autres unités mobiles (1) les règles qui ont été déclenchées dans l'unité mobile (1) et la fonction qui est exécutée.

5. Procédé selon l'une des revendications précédentes, dans lequel l'unité de requête (2) est agencée pour transmettre à l'unité mobile (1) l'importance et/ou l'urgence de l'exécution de la fonction.

6. Système (5), comprenant :
- au moins une unité de requête (2),
- au moins une unité mobile (1) qui est agencée pour fournir des fonctionnalités pour au moins une fonction requise de l'unité de requête (2) déportée par l'unité mobile et pour l'exécuter en cas de besoin, l'exécution de la fonction étant dépendante du contexte,
- un module de moteur de règles (1.2) formé dans l'unité mobile (1), qui est agencé pour exécuter la fonction à l'aide d'un ensemble de règles de contexte stocké dans le module de moteur de règles (1.2), dans lequel la fonction est exécutée dans l'unité mobile (1) dans lequel la fonction déjà exécutée est arrêtée lorsqu'une ou plusieurs règles de l'ensemble de règles de contexte sont satisfaites,
**caractérisé en ce que**
le système est conçu comme un nuage de périphérie (5) et l'unité mobile comme un noeud de périphérie (1).

7. Système selon la revendication 6, **caractérisé par** :
- un module d'exécution de fonction (1.3) formé dans l'unité mobile (1), qui est agencé pour instancier la fonction et l'exécuter de manière isolée d'autres fonctions.

8. Système selon la revendication 6 ou 7, **caractérisé par** :
- un module de gestion de contexte (1.1) formé dans l'unité mobile (1), qui est aménagé pour déterminer le contexte actuel de l'unité mobile (1).

9. Système selon l'une quelconque des revendications 6 à 8, **caractérisé par** :
- un module de gestion des règles (1.4) formé dans l'unité mobile (1), qui est aménagé pour conserver l'ensemble de règles contextuelles.

10. Système selon l'une quelconque des revendications 7 à 9, **caractérisé par** :
- un module de référentiel de fonctions (1.5) formé dans l'unité mobile (1), qui est agencé pour stocker les fonctions qui doivent potentiellement être exécutées et les mettre à disposition du module d'exécution de fonctions (1.3).

11. Système selon l'une quelconque des revendications 6 à 10, **caractérisé par** :
- un module prédicteur de contexte (1.6) formé dans l'unité mobile, qui est agencé pour prédire le contexte de l'unité mobile (1) .

12. Système selon l'une quelconque des revendications 6 à 11, **caractérisé par** :
- un module de capteur de contexte (1.8) formé dans l'unité mobile (1), qui est agencé pour générer des informations sur le contexte, en particulier des données de capteurs.

13. Système selon l'une quelconque des revendications 6 à 12, **caractérisé par** :
- un composant de prédiction de mouvement, de chemin, de couverture et de contexte (4) qui est agencé pour prédire des contextes aux composants du système (5), en particulier des profils de mouvement, et pour les mettre à disposition de l'unité mobile (1).
